# EUROPEAN PATENT SPECIFICATION

(11) **EP 1 637 787 B1**
(45) Date of publication and mention of the grant of the patent: **02.12.2009**
(21) Application number: 05020134.2
(22) Date of filing: 15.09.2005
(51) Int. Cl.: F16L 11/11, F16L 58/02, B28B 21/52, F16L 11/08, F16L 11/112

(54) **Corrugated tube with outer protection layer**
Wellschlauch mit äusserer Schutzschicht
Tuyau ondulé à enveloppe externe de protection

(30) Priority: 16.09.2004 IT MI20041767
(43) Date of publication of application: 22.03.2006
(73) Proprietor: Merlett Tecnoplastic S.p.A., 21020 Daverio VA (IT)
(72) Inventor: Tamborini, Ariberto, 21020 Daverio (Varese) (IT)
(74) Representative: Cicogna, Franco

(56) References cited:
- WO-A-01/04530
- DE-A1- 4 307 713

## Description

### BACKGROUND OF THE INVENTION

The present invention relates to a lightened coiled tube having a high resistance against ageing and wearing.

As is known, plastics material coiled tube are conventionally manufactured by co-extruding a rigid thermoplastic polymer coil or spiral with a flexible structure, of preset shape, made of a thermoplastic material.

The thus formed construction has the required technical flexibility, pressure or suction tightness and high mechanical stress resistance features, such as a high resistance against pulling and compression forces.

However, in some cases, in particular for larger diameters, the tube has the disadvantage of having a comparatively high weight.

In such a condition, said tubes can be transported or entrained with great difficulties, and the amount of rigid material used for the reinforcement coil or spiral increases remarkably the cost of the product.

The document DE 43 07 713 discloses substantially the preamble of claim 1.

### SUMMARY OF THE INVENTION

Accordingly, the aim of the present invention is to overcome the above mentioned drawbacks.

Within the scope of the above mentioned aim, a main object of the invention is to provide such a plastics material coiled tube or pipe which, while holding the technical characteristics of existing tubes or pipes unaltered, has a less weight and cost and a greater use flexibility.

A further object of the present invention is to provide such an improved plastics material tube or pipe, which has a small weight, is very flexible, adapted to resist against wear and abrasion and which can be made at a very competitive cost with respect to existing like tubes or pipes.

According to one aspect of the present invention, the above mentioned aim and objects, as well as yet other objects, which will become more apparent hereinafter, are achieved by a lightened coiled tube, having a high resistance against ageing and wearing, according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention which is illustrated, by way of an indicative, but not limitative, example in the accompanying drawings, where:

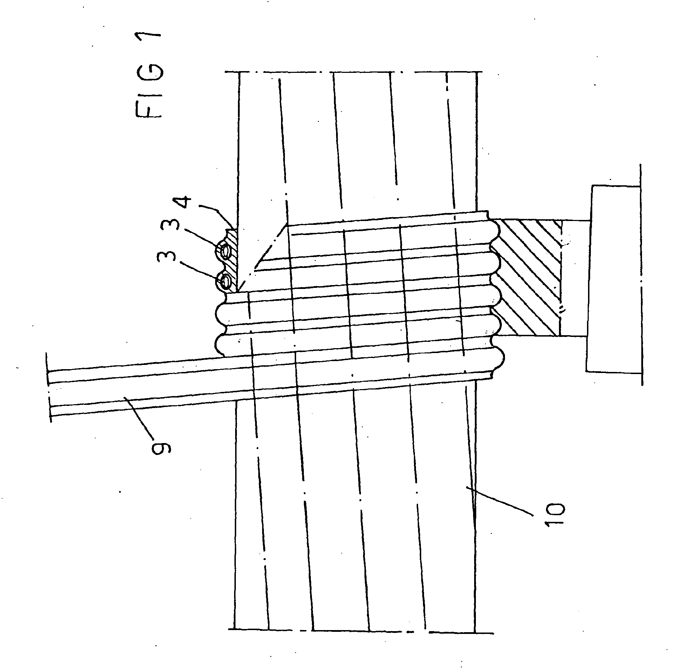

Figure 1 is a partially cross-sectioned front view of a pulling mandrel, used for making the coiled tube according to the invention;

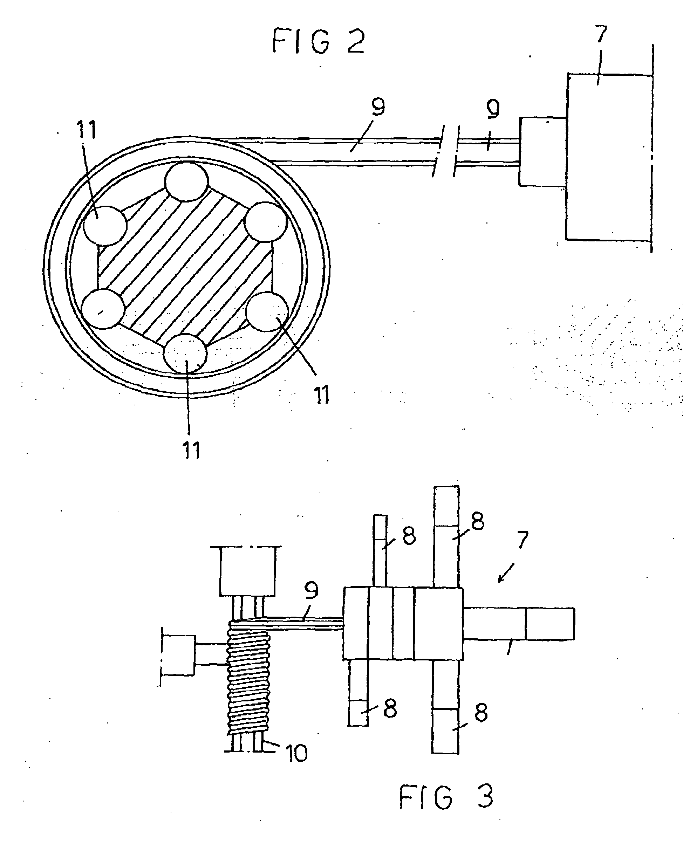

Figure 2 is a side view, on an enlarged scale, of an extruding head and a mandrel, adapted to be used for making the coiled tube according to the invention;
Figure 3 is a schematic view illustrating the extruding head and mandrel shown in figure 2;

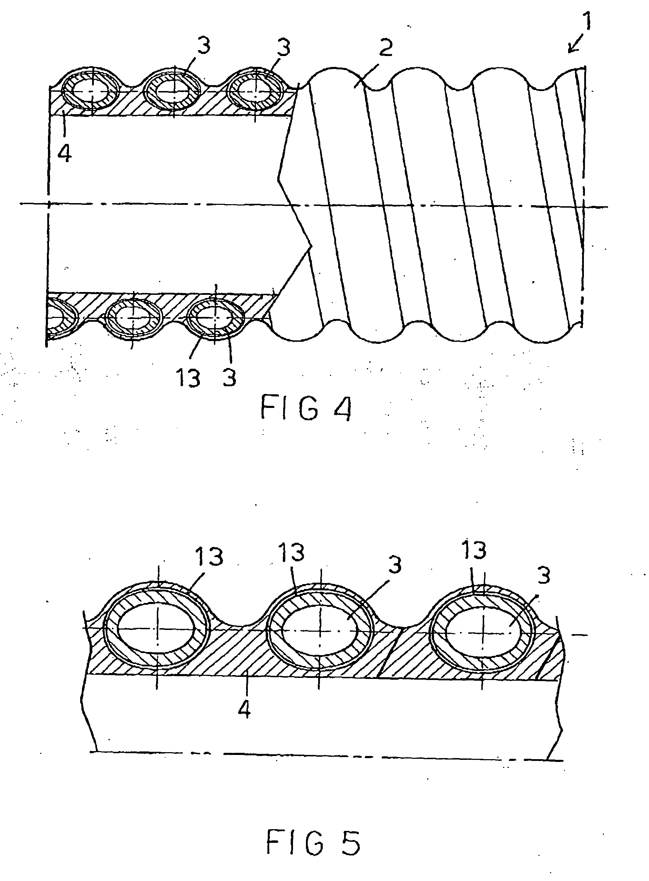

Figure 4 is a partially cross-sectioned perspective view of the improved plastics material coiled tube according to the present invention;
Figure 5 is a further partially cross-sectioned perspective view, on an enlarged scale, illustrating a detail of the coiled tube shown in figure 4;

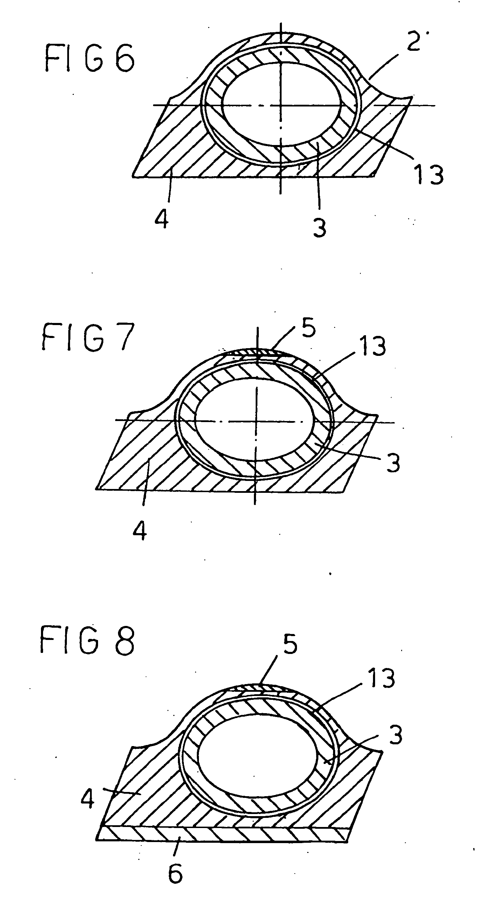

Figure 6 is a further perspective view of a portion of a reinforcement hollow element engaged inside the tube body;
Figure 7 is a perspective view of the element shown in figure 6, thereon a further outer layer is overlapped; and
Figure 8 is a perspective view of the element shown in figure 7, to which a further inner layer has been added.

### DESCRIPTION OF THE PREFERRED EMBODIMENT

With reference to the number references of the above mentioned figures, the coiled tube according to the present invention, which has been generally indicated by the reference number 1, comprises a tube body or main construction 4, encompassing a coil or spiral member 2, formed by a circular cross section hollow element 3.

The body 2 is preferably made of a plasticized polyvinylchloride (PVC) material, having a given flexibility.

The hollow element 3, in turn, is made of a thermoplastic polymer, for example rigid PVC.

The tube 1 is covered on its outside by an anti-abrasion layer 5, made of a polyurethane material or other plastics material of similar characteristics, and being covered in its inside by an analogous layer 6 which, advantageously, can be in turn covered by a disposable layer, very useful to facilitate the making of the tube by prior known making means.

According to the invention, on the outer surface of the hollow element 3 a film 13, of a thermoplastic polymer, having a barrier function against ageing and brittling is co-extruded.

The provision of the film 13 about or encompassing the rigid spiral or coil 3 is very advantageous to assure that the hollow construction of the hollow spiral is not negatively affected by the plasticizing material included in the resin of the flexible structure 4.

The phenomenon called "plasticizing material migration" affects all the plastics tube and the end effect is that of making brittle the reinforcement spiral or coil member 3, thereby causing the tube to be broken, if subjected to a mechanical stress.

The tube 1 is made by hot extruding a strip 9 which, after having being wound on a pulling mandrel 10, will form, at the end of the cooling step, the desired tube.

The extruding process is carried out by an extruding head 7, toward which converge a plurality of extruders 8, each of which will form that portion of the strip or web which will contribute to provide one of the above disclosed tube elements.

In particular, the extruder 8 for making the hollow member 3, comprises pressurized air blowing means, adapted to make the member 3 hollow as the strip or web 9 is formed, at the outlet of the extruding head 7.

Alternately, an extruding die, having a suitable die head, can directly lead on the web 9 being formed the hollow member 3.

Finally, the pulling mandrel 10 adjusts, by a plurality of rollers 11, the inclination of the web or strip 9, thereby causing the strip coils to be fed or advanced along said mandrel, to be welded or sealed to one another thereby providing the target tube, which will be provided in a ready for use condition, at the end of the winding and cooling steps.

The coiled tube 1 according to the invention has all the resistance to wear and abrasion characteristics of prior like tubes, while having a less weight and a larger flexibility.

In fact, the reinforcement coil or spiral 2 does not comprise rigid solid PVC, but a hollow PVC element having preferably a circular cross-section.

It has been found that the invention fully achieves the intended aim and objects.

Actually, in the case of a hollow coil tube, having a less contents of rigid resin, it is very important to assure that the resin material is not etched by the aggressive plasticizing substances, to provide the product with a desired long useful life.

Thus, the tubular construction of the rigid coil or spiral represents an optimum technical approach, assuring a very good compression mechanical strength.

In this connection it should be pointed out that the outer and inner protective layers are made of a polyurethane or other thermoplastic material having anti-abrasive properties.

Furthermore, the obtained product provides a great advantage from the lightness standpoint and accordingly it can be easily transported and shipped; in addition to the foregoing, it has a less end cost.

## Claims

1. A lightened coiled tube (1), having a high resistance against ageing and wearing, whereby said tube (1) comprises a tube body (4) having reinforcement means comprising a coil member (2) formed by a hollow element (3) covered by a thermoplastic polymer film (13) operating as an anti-ageing and anti-brittling barrier, **characterized in that** said coiled tube comprises an additional outer protective layer (5), resistant against abrasions, and an inner protective layer (6), covered by a thin film of another material.

2. A coiled tube (1), according to claim 1, **characterized in that** it is made by winding on a pulling mandrel (10) a strip element (9) supplied by an extruding head (7) to which converge a plurality of extruders (8), adapted to extrude one or more types of plastics material.

3. A coiled tube (1), according to claims 1 and 2, **characterized in that** the hollow element (3) is made using an extruder (8) inside the extruded stream of which is blown pressurized air.

4. A coiled tube, according to the preceding claims, **characterized in that** said hollow element (3) is made by a die assembling including an extruding tool and operatively coupled to the extruding head (7).

5. A coiled tube, according to one or more of the preceding claims, **characterized in that** said tube body (4) comprises a plasticized PVC, whereas said hollow element (3) comprises a rigid PVC.

6. A coiled tube according to one or more of the preceding claims, **characterized in that** said outer (5) and inner (6) protective layers are made of a polyurethane or other thermoplastic material having anti-abrasive properties.

## Patentansprüche

1. Leichter gemachter Wickelschlauch (1) mit hoher Alterungs- und Abnutzungsbeständigkeit, wobei der Schlauch (1) einen Schlauchkörper (4) umfasst, der ein Verstärkungsmittel aufweist, das ein Spiralelement (2) umfasst, welches durch ein hohles Element (3) gebildet ist, das von einem thermoplastischen Polymerfilm (13) bedeckt ist, der als Antialterungs- und Antiversprödungsbarriere wirkt, **dadurch gekennzeichnet, dass** der Wickelschlauch eine zusätzliche äußere Schutzschicht (5), die abriebbeständig ist, und eine innere Schutzschicht (6), die durch einen dünnen Film aus einem anderen Material bedeckt ist, umfasst.

2. Wickelschlauch (1) nach Anspruch 1, **dadurch gekennzeichnet, dass** er durch Wickeln eines Streifenelements (9), das von einem Extrusionskopf (7) geliefert wird, zu dem mehrere Extruder (8), die zur Extrusion einer oder mehrerer Arten von Kunststoffmaterial geeignet sind, zusammenlaufen, auf einen Abziehdorn (10) hergestellt wird.

3. Wickelschlauch (1) nach Anspruch 1 und 2, **dadurch gekennzeichnet, dass** das hohle Element (3) unter Verwendung eines Extruders (8) im Inneren des extrudierten Stroms, von dem Druckluft ausgeblasen wird, hergestellt wird.

4. Wickelschlauch nach den vorhergehenden Ansprüchen, **dadurch gekennzeichnet, dass** das hohle Element (3) durch einen Formaufbau hergestellt wird, der ein Extrusionswerkzeug aufweist und betrieblich mit dem Extrusionskopf (7) gekoppelt ist.

5. Wickelschlauch nach einem oder mehreren der vorhergehenden Ansprüche, **dadurch gekennzeichnet, dass** der Schlauchkörper (4) ein plastifiziertes PVC umfässt, wohingegen das hohle Element (3) ein starres PVC umfasst.

6. Wickelschlauch nach einem oder mehreren der vorhergehenden Ansprüche, **dadurch gekennzeichnet, dass** die äußere (5) und die innere (6) Schutzschicht aus einem Polyurethan oder einem anderen thermoplastischen Material mit Antiabriebeigenschaften bestehen.

## Revendications

1. Tube spiralé (1) allégé ayant une grande résistance au vieillissement et à l'usure, grâce à quoi ledit tube (1) comprend un corps de tube (4) ayant des moyens de renforcement comprenant un élément de spire (2) formé par un élément creux (3) recouvert d'un film de polymère thermoplastique (13) fonctionnant comme une barrière anti-vieillissement et anti-cassure, **caractérisé en ce que** ledit tube spiralé comprend une couche protectrice externe supplémentaire (5) résistante aux abrasions, et une couche protectrice interne (6) recouverte d'un mince film d'un autre matériau.

2. Tube spiralé (1) selon la revendication 1, **caractérisé en ce qu'**il est réalisé en enroulant, sur un poinçon de tirage (10),un élément de bande (9) fourni par une tête d'extrusion (7) vers laquelle convergent une pluralité d'extrudeuses (8) conçues pour extruder un ou plusieurs type(s) de matière plastique.

3. Tube spiralé (1) selon les revendications 1 et 2, **caractérisé en ce que** l'élément creux (3) est fabriqué en utilisant une extrudeuse (8) à l'intérieur de la coulée d'extrusion de laquelle est soufflé de l'air sous pression.

4. Tube spiralé (1) selon les revendications précédentes, **caractérisé en ce que** ledit élément creux (3) est réalisé par un ensemble de filières incluant un outil d'extrusion et couplé pour fonctionner à la tête d'extrusion (7).

5. Tube spiralé (1) selon une ou plusieurs des revendications précédentes, **caractérisé en ce que** ledit corps de tube (4) comprend un PVC plastifié, tandis que ledit élément creux (3) comprend un PVC rigide.

6. Tube spiralé (1) selon une ou plusieurs des revendications précédentes, **caractérisé en ce que** lesdites couches protectrices externe (5) et interne (6) sont faites en polyuréthane ou une autre matière thermoplastique ayant des propriétés anti-abrasives.
